(19) **Europäisches Patentamt**

**European Patent Office**

**Office européen des brevets**

(11) **EP 1 081 613 A1**

(12) **EUROPEAN PATENT APPLICATION**

(43) Date of publication:
**07.03.2001 Bulletin 2001/10**

(51) Int Cl.⁷: **G06F 17/30**

(21) Application number: **99610046.7**

(22) Date of filing: **13.08.1999**

| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **Mindpass A/S**<br>**9220 Aalborg (DK)** | (72) Inventors:<br> • **Fruensgaard, Finn Ove**<br>   **9000 Aalborg (DK)**<br> • **Kjaersgaard, Jesper**<br>   **9260 Gistrup (DK)**<br><br>(74) Representative: **Wittrup, Flemming et al**<br>   **Hofman-Bang A/S,**<br>   **Hans Bekkevolds Allé 7**<br>   **2900 Hellerup (DK)** |

(54) **A method and an apparatus for generically and transparently expanding and contracting a query**

(57)    The invention relates to an apparatus and method of genericallly and transparently expanding and contracting a query comprising the steps of:

receiving a first query comprising one or more search values, obtaining a second query by a first processing of the first query,
executing the second query in a database, receiving a first result comprising one or more rows with instances of data from the database on the basis of the second query, and providing a second result by a second processing of the first result, wherein the first processing is done by expanding the first query according to one or more query functions, the second processing is done by contracting the first result, and in that the method further comprises the step of calculating an overall score for one or more query functions according to a second function.

The invention also relates to a computer-readable medium and a computer program element comprising computer program code means adapted to perform the method

Fig. 1

**EP 1 081 613 A1**

**Description**

The present invention relates to a method of generically and transparently expanding and contracting a query, comprising the steps of:

A. receiving a first query comprising one or more search values,
B. obtaining a second query by a first processing of the first query,
C. executing the second query in a database,
D. receiving a first result comprising one or more rows with instances of data from the database on the basis of the second query, and
E. providing a second result by a second processing of the first result.

The present invention also relates to an apparatus for generically and transparently expanding and contracting a query, comprising:

- receiving means adapted to receive a first query comprising one or more search values,
- processing means adapted to provide a second query by a first processing of the first query,
- executing means adapted to execute the second query in a database,
- receiving means adapted to receive a first result comprising one or more rows with instances of data from the database on the basis of the second query, and
- processing means adapted to provide a second result by a second processing of the first result.

This invention relates to a generic method and apparatus for expanding and contracting a query in order to include functionality in the form of query functions like Fuzzy logic and a rating/scoring function in a standardised query language, e.g. SQL, thereby providing access to multiple heterogeneous data sources and/or homogeneous sources.
Searching of information in structured information sources like databases is most often done by using SQL (Standard Query Language) which is a very common standard query language to which almost every database has an interface.
However, one of the disadvantages of SQL is that the results obtained by a query are presented to the user in the order that they are retrieved from the database. This gives the user a very poor general view of which result is the most important for him.
Another disadvantage of SQL is that prior to the generation of an SQL query the type of the contents of the individual fields, i.e. field types/values, must be known. This is generally far from being the case. A type of field that varies very much from database to database is e.g. a field containing a date. Additionally the range of values, i.e. dimension, must be known in order to specify/construct a usable query. E.g., one needs to know if the values of a given row in a database are within a range of -1000 to 1000 or -1 to 1.
Yet another problem is the handling of consistency of values for the individual fields. A great inconsistency may occur dependent on who enters the data and how the data is entered into a database. Different sales persons might input data for a given product differently. In a field which was designed to receive "Yes" and "No", different people could enter: "Y", "y", "N", "n", "+", "", etc.
Therefore it is often necessary to cleanse a database at a regular interval of time to ensure consistency for each type of field. Cleansing is both a very time consuming and computationally heavy task, especially for large databases. Further, cleansing of a database may delete valuable information, since information may be hidden in the way different data is entered into the database. For example, if a field was to contain the value "Yes" or "No" reflecting an answer to "coloured", the entered data may be "green", "blue" etc. During cleansing the information of the actual colour will be lost and changed to "YES".
SQL only gives the possibility of 'Categorical Query', i.e. there has to be an exact match to provided search criteria in order to obtain a result, or a null result will be given.
Even though fuzzy functions and phonetics are known in connection with databases it needs a dedicated driver; e.g. Oracle has some of this functionality in their "Stored Procedures", which is dedicated to an Oracle database. Other database vendors have similar functionalities bound to their proprietary systems.
The object of the invention is to provide a method which enables a generic and more intelligent communication with one or more standard databases and a more intelligent handling of the data/values in the fields of the database (s). The database(s) may even be heterogeneous.
This is achieved by a method of the said type

- the first processing is done by expanding the first query according to one or more query functions,
- the second processing is done by contracting the first result,

and in that the method further comprises the step of F.calculating an overall score for one or more query functions according to a second function.

Hereby, a method is provided where a generic 'intercepting' layer of functionality may be applied to incorporate many different functionalities between the user at one end and the database at the other. In this way, the user sees a 'virtual database' having the functionality which the generic and intercepting layer provides.

The method is generic, since the functionality is transparent, i.e. intercepting, and builds on a standard query language.

Additionally the method is able to handle lacking consistency in different fields of e.g. an SQL, database, thereby avoiding the need for cleansing.

Additionally the method is able to sort the result of an SQL query, e.g. by ranking and indication of metric distance given by an overall score so that the most relevant information is presented first to the user.

These features bring the quality of a search up to a higher level than possible in a standard SQL search.

In accordance with an embodiment the database is a virtual database comprising one or more heterogeneous sources and/or homogenous sources. Theses sources may be standard databases or even file systems and other unstructured information sources.

In this way a user only sees or experiences the communication with a collection of databases as communication with a single database and does not have to worry about or even know which data requested by him comes from which physical database. Additionally the user may request data from heterogeneous databases/sources. All that is needed is the implementation of corresponding query functions.

In accordance with another embodiment the method is repeated until the overall score for all query functions satisfies a given criterion.

Hereby, it is possible to expand the original query gradually, so that only the most relevant information is retrieved. If no result is returned, then the query can be expanded to search for values with differ more from the originally specified search value(s). This functionality will be denoted a 'Query Manager' in the following.

In accordance with another embodiment the expanding of the first query for each repetition of the method is done according to only the query functions having an overall score which does not satisfy the given criteria.

Hereby, only the parts of the originally expanded query not satisfying the given criteria have their distance to the specified search value(s) enlarged, which reduces the computational effort needed to bring all the overall scores for the query functions into satisfaction.

In accordance with another embodiment the contracting of the first result by the second processing is done on the basis of the overall score for one or more query functions.

In accordance with another embodiment the overall score for one or more query functions is calculated on the basis of one or more individual scores.

In accordance with another embodiment the one or more individual scores are calculated as a metric distance representing how close the instances of data in the first result are to the one or more search values.

In accordance with another embodiment the one or more query functions execute one or more of the functions:

- automatic translation of words,
- conversion of values,
- fuzzy logic functions,
- personalising,
- security control functions.

In this way it is possible to have query functions which can e.g. automatically convert words between one or more languages. For example all words contained in one or more databases may be translated into another language, e.g. from English into Danish.

The query functions may also provide an automatic conversion of values. This avoids the need for cleansing of the database since fields having a format that differs can be converted by the intercepting layer/query functions and be presented to the user in a uniform way. For example "Y", "y", "+" and "N", "n", "-" may be converted into "Yes" and "No", respectively.

This enables intelligent handling of fields with contents that frequently vary, e.g. time, dates, etc.

Another advantage is the possibility of being able to include fuzzy logic in an existing SQL database by using the query functions. This gives the advantage that e.g. if the user specifies a search value and that value is not present in any field in the database being searched, then the user can be presented with the value or values being closest to the specified search value. This is not possible in a standard SQL without any functional layer.

Additionally functionality may be personalising and/or security control functions responding indirectly to input parameters from the user level or from an application handling the communication between the user and the database as well as receiving input and presenting results to the user.

The above functionalities are only examples and in principle all kinds of different functionalities may be implemented.

This together with the 'Query Manager' is a very useful feature, since the 'Query Manager' gives the possibility of repeated expansion/evaluation until a given criterion is met and/or a satisfactory result is obtained.

For example, it is possible to 'Query by example', since a result can always be presented to the user, i.e. the result being closest to the specified search value, as opposed to a standard SQL database where a null result will be provided if a search value is not present in the database.

Alternatively, the query functions of a layer may contain combinations of different types of functions so that both fuzzy logic and translation of words are provided, and etc.

Another object of the present invention is to provide an apparatus which enables a more intelligent and generic communication with one or more standard databases and a more intelligent handling of the data/values in the fields of the database(s). The databases may even be heterogeneous.

This object is achieved by an apparatus of the said type where

- the first processing is done by expanding the first query according to one or more query functions,
- the second processing is done by contracting the first result, and that
- an overall score is calculated for one or more query functions according to a second function.

This gives the same advantages for the same reasons as described previously in relation to the method.

Other embodiments of the apparatus according to the invention are characterized by the features defined in the dependent claims which are advantageous for the same reasons as described previously in relation to the method.

Further, the invention relates to a computer-readable medium whose contents are adapted to cause a computer system to perform the method described above. A medium may e.g. be a CD-ROM, a floppy disk, a hard disk, a DVD RAM/ROM drive, a network, etc.

Hereby, when a computer is caused to retrieve electronic information - as a consequence of the contents of a computer-readable medium as described above - the advantages mentioned in connection with the corresponding method according to the invention are achieved.

Finally, the invention relates to a computer program element comprising program code means adapted to enable a computer system to perform the method described above.

When a computer program element causes a computer to retrieve electronic information as described above, the advantages mentioned in connection with the corresponding method according to the invention are achieved.

The present invention will now be described more fully with reference to the drawings, in which

Figure 1 shows a flowchart according to one embodiment of the invention;

Figure 2 shows a fuzzy curve;

Figure 3 illustrates an example of how the Query Manager imposes constraints;

Figure 4 shows a schematic representation of the relationship between different query functions and a database;

Figure 5 illustrates a schematic block diagram of an apparatus according to one embodiment of the invention.

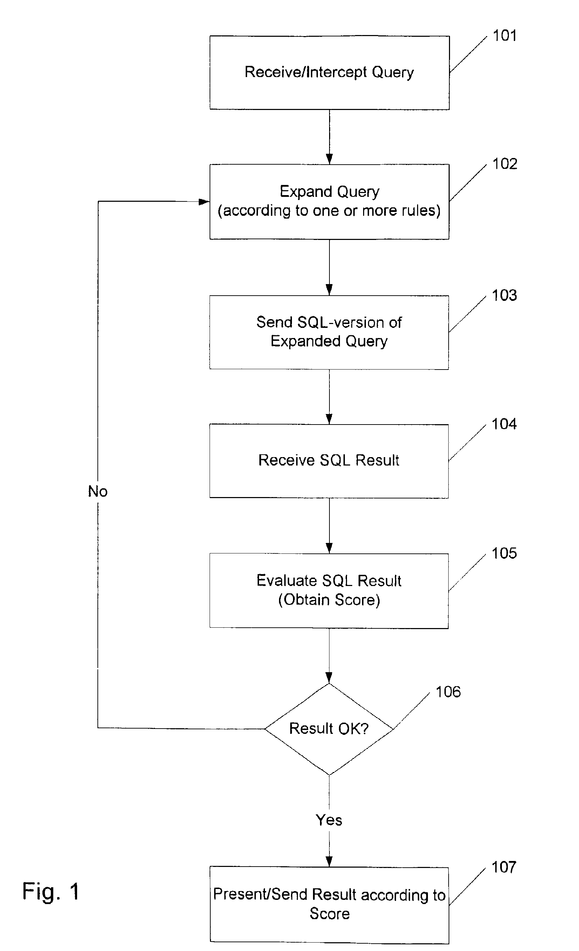

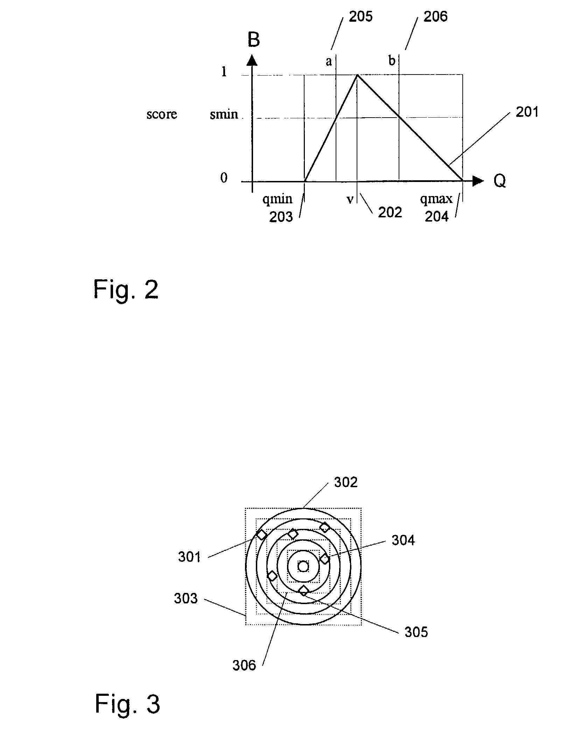

Figure 1 shows a flowchart according to one embodiment of the invention. In the following the method will only be described broadly and a more detailed description will be given later in connection with Figures 2, 3 and 4.

In step (101) a query statement specified by a user is 'intercepted' or received by an application using the method according to the invention. This query is expanded in step (102) according to one or more query functions/rules. Additionally one or more parameters may be specified, e.g. by the user and/or by the application, preferably for each query function together with the original query. An example of a parameter could e.g. be a minimum score for a value of a particular field. These parameters are used together with the query, resulting in one or more restrictions. The result and/or restrictions of each query function return a subpart query which is concatenated into the single expanded query.

The expanded query statement is then sent to the database in step (103) and executed, which returns a search result in step (104) based on the expanded query. The search result consists of a number of rows which have fields fulfilling the expanded query.

The search result is then evaluated in step (105) with respect to how well the returned result is in accordance with the original query. For example, a score for each function may be obtained, as will be described later in connection with Figure 2.

In step (106) it is determined whether the result is OK and thereby ready to be presented to the user. This functionality of checking whether another iteration of expansion and contraction of the query is needed, is denoted a 'Query Manager'. If the result is OK then the result is sent and/or presented to the user in step (107), and if not then the method loops back to step (102) where another iteration of expansion, collection and scoring takes places.

More specifically, if the scores for all query functions are not fulfilled, then the query functions which had non-fulfilled scores generate another sub-query which is expanded in a broader sense, e.g. the interval of values of interest may be expanded. So another expanded query comprising elements from the non-fulfilled query functions with broader values is executed in the database. This is done until all the query functions score sufficiently according to a given criterion, and the method will then proceed to step (107) and present the search result as mentioned earlier.

The various query functions may include many different functions to be performed on the database. Each query function may be applied to only certain fields in the database. Examples of query functions include automatical translation of words from one language into another, conversion of values, fuzzy logic, etc.

Figure 2 shows a fuzzy curve (201). This figure will be used to describe an example of how one query function implementing fuzzy logic returns a subpart of the expanded query and how the obtained result is scored. As an example, the query function is chosen to be a fuzzy query function, associated with the logarithmic fuzzy curve (201), which provides a more intelligent handling of real numbers in a database.

Shown is the logarithmic fuzzy curve (201) which gives the relationship between a real value $q$ and the corresponding fuzzy score $s$. Also shown is a search value v (202) specified by the user in the original query together with $qmin=v/w$ (203) and $qmax=v*w$ (204). $w$ (not shown) is the width of the fuzzy curve and defines the width of the fuzzy curve (201), i.e. for which values/interval of q around v we have a corresponding fuzzy score s different from zero. $qmin$ (203) and $qmax$ (204) in this way give the interval of values we find interesting.

Given the search value v (202) and a minimum score $Smin$ (between 0 and 1), e.g. specified by the user, we need to create a part of an SQL statement for returning all rows of a database table, which scores more than the $Smin$ for a given fuzzy function.

As the field to select in the SQL query we choose an SQL expression $exp$ that returns the real value on which we would like to perform the search. In order to restrict the query we create a subpart of the SQL: *<exp>* BETWEEN *<a>* AND *<b>,* where a (205) and $b$ (206) limit the interval of values we want to include in our search result. $a$ (205) and $b$ (206) are given by:

$$a = S\,m\,in \cdot v + (1 - S\,m\,in) \cdot v \cdot w,$$

$$b = S\,m\,in \cdot v + (1 - S\,m\,in) \cdot \frac{v}{w}.$$

Note that in the special cases where $Smin=1$ or $Smin=0,$ then $a=b=v$ or $a=qmin$ and $b=qmax,$ respectively.

In this way the value of $Smin$ defines the expansion of the interval in which we look for relevant values.

After the query has been executed, a set of rows, each containing a field with a real value within the specified interval, fulfilling the query is returned. These real values for each row are then processed in order to obtain a score, $S$, for each of the rows. This score is a measure of how close the real value in a particular row is to the original search value $v$.

The scoring is preferably:

$$S = \begin{cases} v - \dfrac{q}{v \cdot w} - v & , \text{ if } q > v \\ v - \dfrac{q}{v/w} - v & , \text{ otherwise}. \end{cases}$$

This score, $S$, e.g. enables the presentation of retrieved rows from the database to be sorted according to which row has a real value which is closest to the specified search value.

In this way fuzzy functions may be used to expand values. For example, the user may specify interest in a value of 100 and be presented with a search result containing fields in the interval of 90 to 110 sorted according to how close the fields are to the initial, specified value of 100, i.e. sorted according to their score.

Figure 3 illustrates an example of how the Query Manager gradually imposes different constraints on the expanded query. It is very useful to gradually broaden the interval of values which are retrieved by the method, i.e. to reduce the $Smin$ (see Figure 2). In this way it is possible, by evaluating a total score for each iteration of the Query Manager, to stop when interesting information/values have been retrieved without the inclusion of uninteresting noise in the form of fields containing a value that is very far from the original, specified search criteria.

In this way we want to find the best *n* matches for a query by performing a number of queries starting with an exact match and ending with a very broad query. When each query function, e.g. fuzzy query function, is asked to construct an SQL query, it is given the minimum score *Smin.* The query function should then construct an SQL query which returns all the rows of the database table that have a score equal to or higher than the specified *Smin.* This process is done for each query function independent of each other. In this way the Query Manager expands the SQL query until it is guaranteed that the result contains the *n* best rows of the database table.

The overall score of a row is calculated by the expression:

$$S = \Pi \; s_i^{w_i},$$

where $s_i \in [0;1]$ is the score of the *i*'th query function, $W_i \in [0;\infty]$ is a weight number applied to the *i*'th query function, and *S* is the overall score obtained by multiplying all the individual scores of each query function together.

The restrictions given by the individual query functions form a 'bounding box' for the query in question. The result is found by expanding the overall minimum score and thereby the bounding box until the best n overall scores are greater than the given overall minimum score.

As an example we assume that we execute a query using the following sequence of minimum overall scores:

$$S' \; 1.0; \; S'= 0.8; \; S'= 0.6; \; S'= 0.4; \; S'= 0.2; \; S'= 0.0;$$

Then the bounding box would increase in size as *S'* gets smaller. *S'*= 1.0 means that only rows with fields having values identical with the specified search number/keyword (see Figure 2) are returned, and *S'* = 0.0 means that all rows are returned.

This process of a gradually expanding fuzzy search is illustrated in Figure 3 where the diamonds (301) represent different rows in the database table, the circles (302) represent the distance of the field and the query, and the boxes (303) represent the 'bounding boxes' for each of the overall minimum scores *S'*.

As can be seen in Figure 3 no rows for *S'*=1.0 are returned. When the Query Manager receives no rows, it generates another expanded query with *S'*=0.8 which does not return any rows either. For *S'*=0.6 two rows (304 and 305) are returned which both have the same distance as illustrated by the bounding box (306). This procedure is repeated until all the interesting rows are returned either by *S'*=0.0 or by a given criterion, e.g. specified by the user or internally by the method. Such a criterion may be a metric distance of e.g. 5%, 10%, etc.

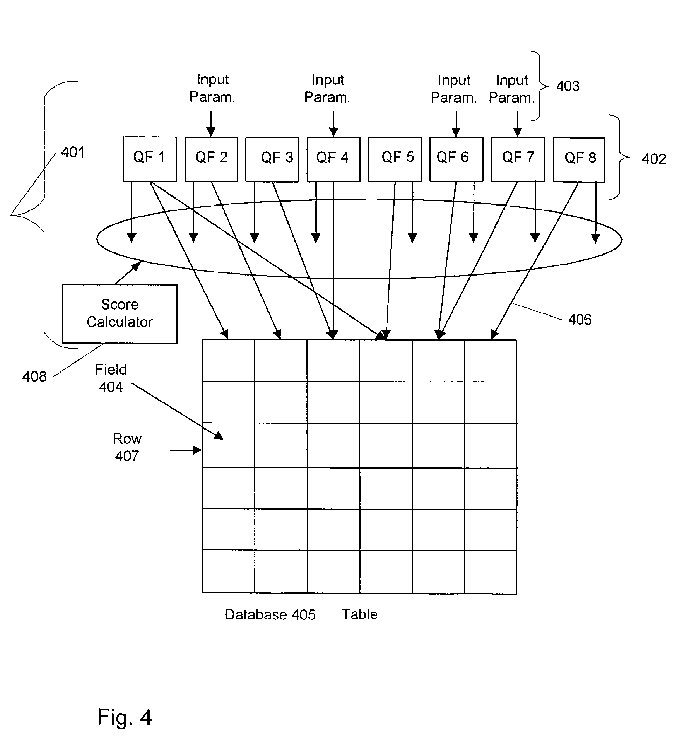

Figure 4 shows a schematic representation of the relationship between different query functions and a database. Shown is the intercepting layer (401) of query functions (402). In this example eight different query functions (402) are shown, each providing different functionalities.

The query functions (402) receive/intercept the original query e.g. together with additional parameters (403) specified by the user or internally by an application. These additional parameters (403) may be maximum metric distance, maximum number of returned rows, etc.

After receiving the original query, each query function (402) generates an expanded sub SQL statement according to that particular query function and parameters, if any. The expanded sub statement relates to one or more fields (404) in the database (405) as indicated by the arrows (406) pointing from the query functions (402) to the database (405) in Figure 4. The fields (404) to which a given query function relates may e.g. be predefined or dependent on the parameters (403). All these SQL statements from each query function are then concatenated into a single expanded SQL statement, which is executed in the database (405), and a search result containing rows (407) with fields (404) fulfilling the expanded query is returned.

The search result is sent back to the intercepting/receiving layer (401) where each query function (402) receives the values each particular query function (402) was responsible for selecting. If two or more query functions (402) both selected a specific field, the value of that field is returned to both query functions (403) .

After the query functions (402) have received the values from the database (405) a scoring of the result is executed by a Score Calculator (408) as described in connection with Figure 2.

If the scoring for a given query function (402) is sufficient, then the result of that query function (402) is ready to be presented to the user. If the scoring for a given query function (402) is not sufficient, then another iteration may be performed by the Query Manager where a new sub SQL statement is created with gradually fewer and/or looser constraints. All the new sub SQL statements for each query function (402) which did not score sufficiently are concatenated into a new expanded query, which is executed in the database. This procedure is repeted until every query function (402) scores sufficiently.

When all scores are satisfactory, the result of each query function (403) is contracted into a single search result, which is presented to the user.

The user perceives this single result as the result on the basis of the original query and does not have to know of the functionality in the intercepting/receiving layer (401). That is, the user sees a virtual database with the functionality provided by the query functions (402).

The query functions (402) may implement all kinds of different functionality and may be set to perform exactly as desired. For example, the query functions (402) may respond to input parameters (402) from the user level or from an application handling the communication between the user and the database as well as receiving input and presenting results to the user.

In this way the query functions (402) may work as personalisers, security functions, etc.

A personalising part may e.g. be implemented by using an input consisting of a personal profile and using this profile to contribute to the total score in the Score Calculator (408), e.g. by modifying weights, $w_i$, in the individual scoring functions as described in connection with Figure 2. If the results found are not within the personal profile they will be scored very low and thereby not be relevant as such.

A security function may be implemented in a similar way, since fields or results not accessible to the user will score too low to match.

In an alternative embodiment the intercepting/receiving layer (401) is connected to two or more databases.

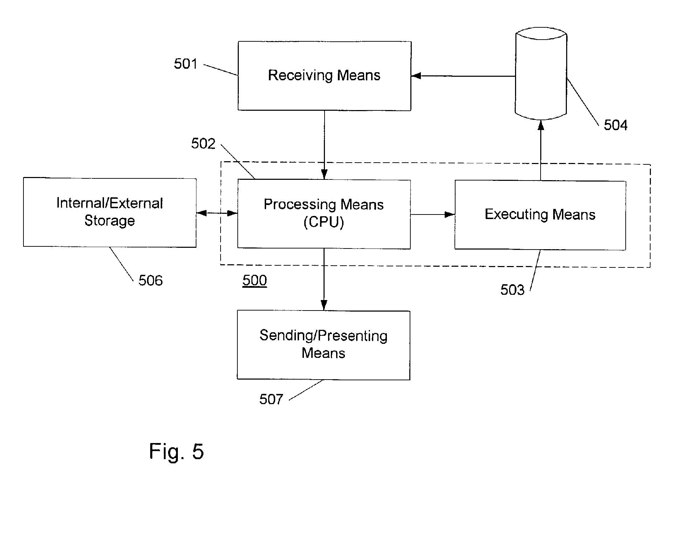

Figure 5 illustrates a schematic block diagram of an apparatus according to one embodiment of the invention. Shown here are processing means (502) which may be any kind of a CPU. The processing means (502) are connected to receiving means (501) which are responsible for receiving information from other units outside the apparatus. This information may e.g. be data from a database (504) or input directly by a user, e.g. by mouse and keyboard or the like, or from another (server/client) application e.g. providing a graphical interface to the user and/or handling the exchange of information in a network. The database (504) may be a locally or externally stored database. Alternatively the database (504) may comprise one or more heterogeneous and/or homogeneous databases which the user, through the functionality of the layer, may perceive as one single database. In this way data from many different databases may be accessed by one query if query functions are specified which handle this situation properly. So the user does not have to think about which databases contain which data when he specifies a query.

The processing means (502) are also connected to storing means (506) for storage and later retrieval of results, variables, etc. The storing means (506) may be any kind of RAM, hard disk, etc. (preferably a combination).

The processing means (502) are additionally connected to executing means (503) which are responsible for executing the query expanded by the processing means (502) in one or more databases (504). In a preferred embodiment the processing means (502) and the executing means (503) are formed by a single CPU means (500).

The processing means (502) are also connected to sending/presenting means (507), e.g. a display, for displaying information, choices, results, etc. to a user, or for sending the result(s) of a query to another application which may be responsible for presenting the result(s) to a user and/or long-time storage, etc.

The processing means (403) are responsible for the execution of a program which enables the expansion of a query according to one or more query functions, the expanded query being executed in one or more databases (504) instead of the original query. The query functions provide the possibility of implementing different functionalities like fuzzy functions, etc. into a standard database (504) transparently to the user.

After the expanded query has been executed by the executing means (503) in the database (504) the receiving means (510) receive a result of the expanded query. The result is a number of rows which fulfil the expanded query. The result is then sent to the processing means (502) where a score for each query functions is provided. If not all scores satisfy a given criterion, a new expanded query is generated which is then executed in the database (504).

This is repeated until all the scores are satisfactory, and then the result is presented to the user or sent to another application via the sending/presenting means (507).


**Claims**

1.  A method of generically and transparently expanding and contracting a query, comprising the steps of:

> A.receiving a first query comprising one or more search values,
> B.obtaining a second query by a first processing of the first query,
> C.executing the second query in a database,
> D.receiving a first result comprising one or more rows with instances of data from the database on the basis of the second query, and
> E.providing a second result by a second processing of the first result,

characterized in that

- the first processing is done by expanding the first query according to one or more query functions,
- the second processing is done by contracting the first result, and in that the method further comprises the step of

F. calculating an overall score for one or more query functions according to a second function.

2. A method according to claim 1, **characterized** in that the database is a virtual database comprising one or more heterogeneous sources and/or homogenous sources.

3. A method according to claim 1 or 2, **characterised** in that the steps A - F of the method are repeated until the overall score for all query functions satisfies a given criterion.

4. A method according to claim 3, **characterized** in that the expanding of the first query for each repetition of the method is done according to only the query functions having an overall score which does not satisfy the given criterion.

5. A method according to claims 1 - 4, **characterised** in that the contracting of the first result by the second processing is done on the basis of the overall score for one or more query functions.

6. A method according to claims 1 - 5, **characterised** in that the overall score for one or more query functions is calculated on the basis of one or more individual scores.

7. A method according to claims 1 - 6, **characterised** in that the one or more individual scores are calculated as a metric distance representing how close the instances of data in the first result is to the one or more search values.

8. A method according to claims 1 - 7, **characterised** in that the one or more query functions execute one or more of the functions:

- automatic translation of words,
- conversion of values,
- fuzzy logic functions,
- personalising,
- security control functions.

9. A method according to any one of the previous claims, characterized in that the query is an SQL query.

10. An apparatus for generically and transparently expanding and contracting a query comprising:

- receiving means adapted to receive a first query comprising one or more search values,
- processing means adapted to provide a second query by a first processing of the first query,
- executing means adapted to execute the second query in a database,
- receiving means adapted to receive a first result comprising one or more rows with instances of data from the database on the basis of the second query, and
- processing means adapted to provide a second result by a second processing of the first result,

**characterized** in that

- the first processing is done by expanding the first query according to one or more query functions,
- the second processing is done by contracting the first result, and in that
- an overall score is calculated for one or more query functions according to a second function.

11. An apparatus according to claim 10, **characterised** in that the database is a virtual database comprising one or more heterogeneous sources and/or homogenous sources.

12. An apparatus according to claim 10 or 11, **characterised** in that the apparatus further comprises means adapted to repeat:

- receiving a first query,
- obtaining a second query,
- executing the second query,
- receiving a first result, and
- calculating an overall score until the overall score for all query functions satisfies a given criterion.

**13.** An apparatus according to claim 12, **characterised** in that the expanding of the first query for each repetition of the method is done according to only the query functions having an overall score which does not satisfy the given criteria.

**14.** An apparatus according to claims 10 - 13, **characterised** in that the contracting of the first result by the second processing is done on the basis of the overall score for one or more query functions.

**15.** An apparatus according to claims 10 - 14, **characterised** in that the overall score for one or more query functions is calculated on the basis of one or more individual scores.

**16.** An apparatus according to claims 10 - 15, **characterised** in that the one or more individual scores are calculated as a metric distance representing how close the instances of data in the first result is to the one or more search values.

**17.** An apparatus according to claims 10 - 16, **characterised** in that the one or more query functions execute one or more of the functions:

- automatic translation of words,
- conversion of values,
- fuzzy logic functions,
- personalising,
- security control functions.

**18.** An apparatus according to any one of the previous claims, characterized in that the query is an SQL query.

**19.** A computer-readable medium whose contents are adapted to cause a computer system to perform the method according to any one of claims 1 - 9.

**20.** A computer program element comprising program code means adapted to enable a computer system to perform the method according to any one of claims 1 - 9.

Fig. 1

Receive/Intercept Query — 101

Expand Query
(according to one or more rules) — 102

Send SQL-version of
Expanded Query — 103

Receive SQL Result — 104

Evaluate SQL Result
(Obtain Score) — 105

Result OK? — 106

No

Yes

Present/Send Result according to
Score — 107

Fig. 2

Fig. 3

Fig. 4

501 — Receiving Means

502 — Processing Means (CPU)

504

Internal/External Storage

Executing Means

506

500

503

Sending/Presenting Means

507

Fig. 5

**European Patent Office**

## EUROPEAN SEARCH REPORT

Application Number

EP 99 61 0046

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | WO 97 12333 A (INFONAUTICS CORP) 3 April 1997 (1997-04-03) * abstract; figures 1-4,6 * * page 2, line 26 - page 9, line 20 * --- | 1-20 | G06F17/30 |
| X | WOELK D ET AL: "Model driven enterprise information management in Carnot" ENTERPRISE INTEGRATION MODELING. PROCEEDINGS OF THE FIRST INTERNATIONAL CONFERENCE, HILTON HEAD, SC, USA, 8-12 JUNE 1992, pages 300-309, XP000874795 1992, Cambridge, MA, USA, MIT Press, USA ISBN: 0-262-66080-6 * abstract * * page 305, line 6 - page 307, line 7 * --- | 1-20 | |
| X | SHELDON M A ET AL: "Discover: a resource discovery system based on content routing" COMPUTER NETWORKS AND ISDN SYSTEMS,NL,NORTH HOLLAND PUBLISHING. AMSTERDAM, vol. 27, no. 6, 1 April 1995 (1995-04-01), pages 953-972, XP004013198 ISSN: 0169-7552 * abstract * * page 958, column 1, line 4 - page 971, column 1, line 7 * --- | 1-20 | TECHNICAL FIELDS SEARCHED (Int.Cl.7) G06F |
| A | WO 97 34242 A (LEXIS NEXIS A DIVISION OF REED) 18 September 1997 (1997-09-18) * abstract; figures 1-5 * * page 1, line 1 - page 3, line 6 * --- | 1-20 | |
| A | US 5 920 854 A (MILLER ED R ET AL) 6 July 1999 (1999-07-06) * abstract * ----- | 1-20 | |

The present search report has been drawn up for all claims

| Place of search | Date of completion of the search | Examiner |
|---|---|---|
| THE HAGUE | 8 February 2000 | Katerbau, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 99 61 0046

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2000

| Patent document cited in search report | | Publication date | Patent family member(s) | | Publication date |
|---|---|---|---|---|---|
| WO 9712333 | A | 03-04-1997 | US | 5721902 A | 24-02-1998 |
| | | | AU | 7240596 A | 17-04-1997 |
| WO 9734242 | A | 18-09-1997 | US | 5926811 A | 20-07-1999 |
| | | | AU | 2060997 A | 01-10-1997 |
| | | | CA | 2248793 A | 18-09-1997 |
| | | | EP | 0901660 A | 17-03-1999 |
| US 5920854 | A | 06-07-1999 | AU | 3485697 A | 06-03-1998 |
| | | | WO | 9807105 A | 19-02-1998 |